# EUROPEAN PATENT APPLICATION

(11) **EP 4 564 689 A1**
(43) Date of publication of application: **04.06.2025**
(21) Application number: 23846951.4
(22) Date of filing: 25.07.2023
(51) Int. Cl.: H04B 7/024, H04B 7/08, H04W 24/08, H04W 72/231, H04W 72/232

(54) **COMMUNICATION METHOD OF MULTI-RECEPTION CHAIN TERMINAL**

(30) Priority: 28.07.2022 US 202263392871 P
(71) Applicant: LG Electronics Inc., Yeongdeungpo-gu Seoul 07336 (KR)
(72) Inventor: HWANG, Jinyup, Seoul 06772 (KR); YANG, Yoonoh, Seoul 06772 (KR); LEE, Sangwook, Seoul 06772 (KR); HUH, Joongkwan, Seoul 06772 (KR); PARK, Jinwoong, Seoul 06772 (KR); NA, Yunsik, Seoul 06772 (KR)
(74) Representative: Maikowski & Ninnemann Patentanwälte Partnerschaft mbB
(86) International application number: PCT/KR2023/010718
(87) International publication number: WO 2024/025292

(57) **Abstract**

An embodiment of the present disclosure provides a method for performing communication by a UE. The method comprises the steps of: receiving a transmission configuration indicator (TCI) state configuration at time point t0 from a network, wherein the TCI state configuration includes i) a configuration of a first TCI state for a first transmission/reception point (TRP) and ii) a configuration of a second TCI state for a second TRP; configuring a first reception beam with a first antenna panel at time point t1 on the basis of the first TCI state; configuring a second reception beam with a second antenna panel at time point t2 on the basis of the second TCI state; and simultaneously performing communication with the first TRP and the second TRP by using the configured first reception beam and the configured second reception beam after tdelay from time point t0, wherein there is a time difference of toffset between time point t1 and time point t2, and tdelay includes toffset.

## Description

### TECHNICAL FIELD

The present specification relates to mobile communications.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

### DISCLOSURE

### TECHNICAL PROBLEM

In order for the terminal to perform smooth communication, it is necessary to specify the time required for TCI state changes for multiple receiving chains.

### TECHNICAL SOLUTION

Communication is performed taking into account the time required for TCI state changes for multiple receiver chains.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of UE to which implementations of the present disclosure is applied.
FIG. 4 is a diagram showing an example of a communication structure that can be provided in a 6G system.
FIG. 5 shows an example of an electromagnetic spectrum.
FIG. 6 shows an example of subframe types in NR.
FIG. 7 is an exemplary diagram illustrating an example of an SS block in NR.
FIG. 8 is an exemplary diagram illustrating an example of beam sweeping in NR.
FIG. 9 shows the operation of the terminal according to the single Rx chain and the multi-Rx chain.
FIG. 10 shows an example of a TCI state.
FIG. 11 is a flowchart illustrating an example in which a terminal activates two antenna panels.
FIG. 12 shows an example of one TCI state change.
FIG. 13 shows an example of two TCI state changes.
FIG. 14 shows the procedure of the UE according to disclosure of the present specification.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

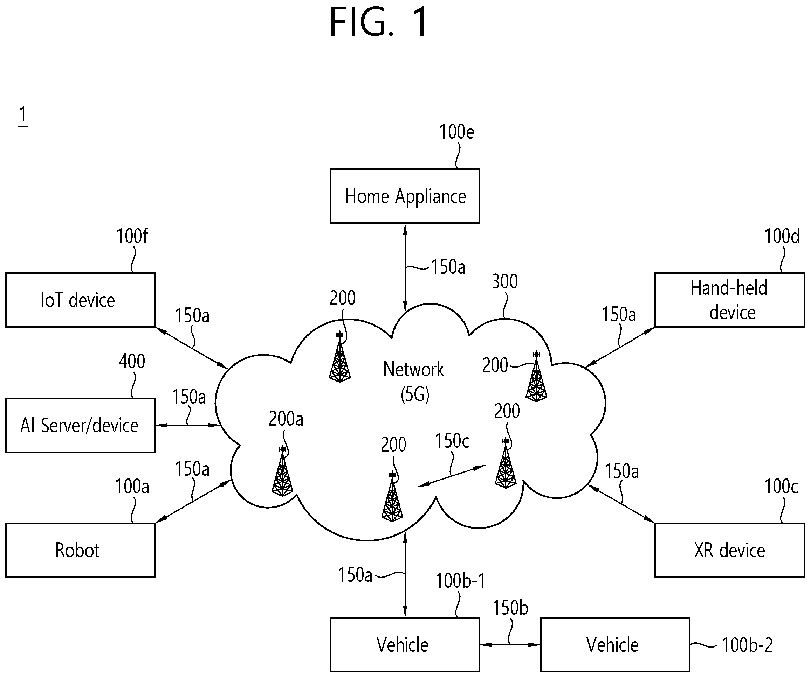

**FIG. 1** **shows an example of a communication system to which implementations of the present disclosure is applied.**

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self- determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

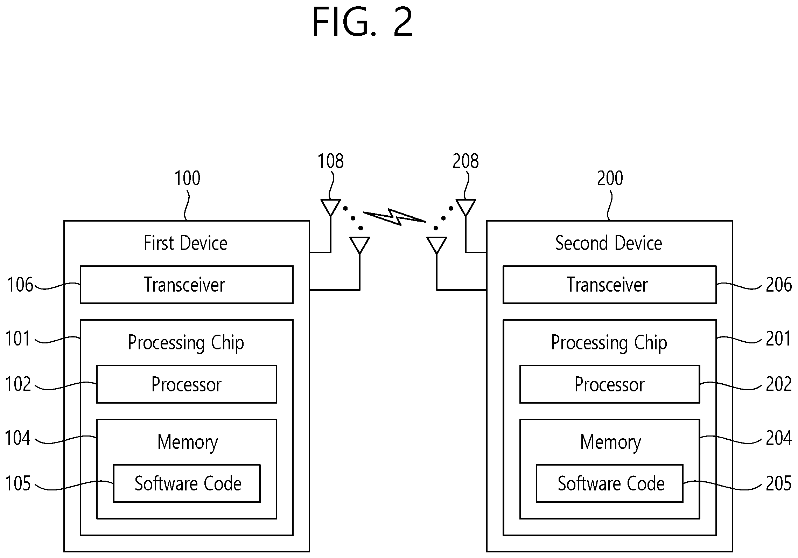

**FIG. 2** **shows an example of wireless devices to which implementations of the present disclosure is applied.**

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor.

The one or more memories 104 and 204 may be connected to the one or more processors 102 and 202 and store various types of data, signals, messages, information, programs, code, instructions, and/or commands. The one or more memories 104 and 204 may be configured by Random Access Memory (RAM), Dynamic RAM (DRAM), Read-Only Memory (ROM), electrically Erasable Programmable Read-Only Memory (EPROM), flash memory, volatile memory, non-volatile memory, hard drive, register, cash memory, computer-readable storage medium, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208. Additionally and/or alternatively, the one or more transceivers 106 and 206 may include one or more antennas 108 and 208. The one or more transceivers 106 and 206 may be adapted to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in Uplink (UL) and as a receiving device in Downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

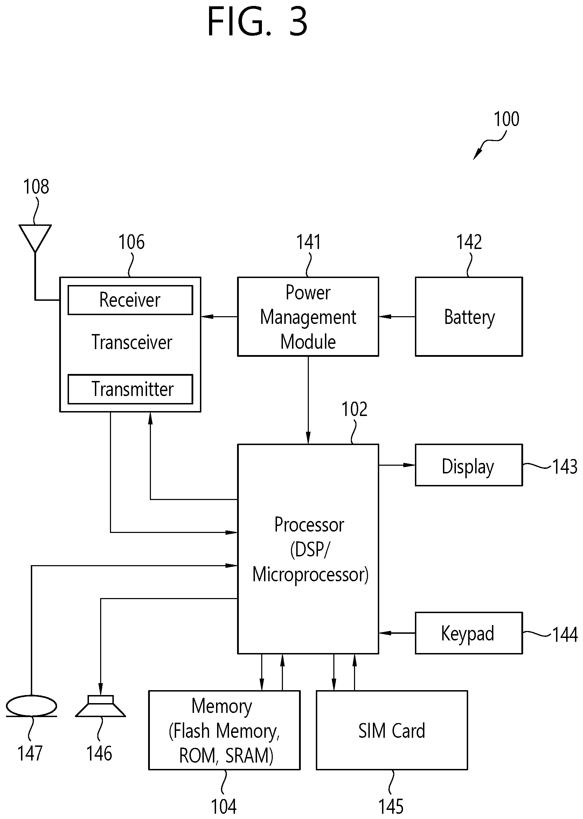

**FIG. 3** **shows an example of UE to which implementations of the present disclosure is applied.**

FIG. 3 shows an example of UE to which implementations of the present disclosure is applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

### <6G System General>

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, and (vii) connected intelligence with machine learning capacity. The vision of the 6G system may include four aspects such as "intelligent connectivity", "deep connectivity", "holographic connectivity" and "ubiquitous connectivity", and the 6G system may satisfy the requirements shown in Table 3 below. That is, Table 3 shows the requirements of the 6G system.

**[Table 3]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

The 6G system may have key factors such as enhanced mobile broadband (eMBB), ultra-reliable low latency communications (URLLC), massive machine type communications (mMTC), AI integrated communication, tactile Internet, high throughput, high network capacity, high energy efficiency, low backhaul and access network congestion and enhanced data security.

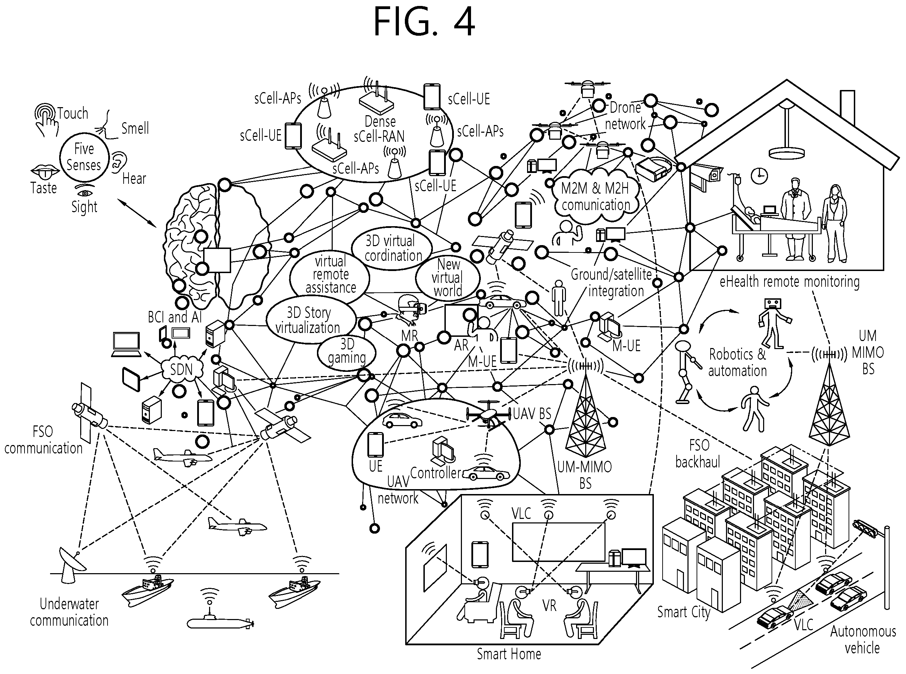

**FIG. 4** **is a diagram showing an example of a communication structure that can be provided in a 6G system.**

The 6G system will have 50 times higher simultaneous wireless communication connectivity than a 5G wireless communication system. URLLC, which is the key feature of 5G, will become more important technology by providing end-to-end latency less than 1 ms in 6G communication. At this time, the 6G system may have much better volumetric spectrum efficiency unlike frequently used domain spectrum efficiency. The 6G system may provide advanced battery technology for energy harvesting and very long battery life and thus mobile devices may not need to be separately charged in the 6G system. In addition, in 6G, new network characteristics may be as follows.
- Satellites integrated network: To provide a global mobile group, 6G will be integrated with satellite. Integrating terrestrial waves, satellites and public networks as one wireless communication system may be very important for 6G.
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer: A 6G wireless network may transfer power in order to charge the batteries of devices such as smartphones and sensors. Therefore, wireless information and energy transfer (WIET) will be integrated.
- Ubiquitous super 3-dimemtion connectivity: Access to networks and core network functions of drones and very low earth orbit satellites will establish super 3D connection in 6G ubiquitous.

In the new network characteristics of 6G, several general requirements may be as follows.
- Small cell networks: The idea of a small cell network was introduced in order to improve received signal quality as a result of throughput, energy efficiency and spectrum efficiency improvement in a cellular system. As a result, the small cell network is an essential feature for 5G and beyond 5G (5GB) communication systems. Accordingly, the 6G communication system also employs the characteristics of the small cell network.
- Ultra-dense heterogeneous network: Ultra-dense heterogeneous networks will be another important characteristic of the 6G communication system. A multi-tier network composed of heterogeneous networks improves overall QoS and reduce costs.
- High-capacity backhaul: Backhaul connection is characterized by a high-capacity backhaul network in order to support high-capacity traffic. A high-speed optical fiber and free space optical (FSO) system may be a possible solution for this problem.
- Radar technology integrated with mobile technology: High-precision localization (or location-based service) through communication is one of the functions of the 6G wireless communication system. Accordingly, the radar system will be integrated with the 6G network.
- Softwarization and virtualization: Softwarization and virtualization are two important functions which are the bases of a design process in a 5GB network in order to ensure flexibility, reconfigurability and programmability.

### <Core implementation technology of 6G system>

### Artificial Intelligence

Technology which is most important in the 6G system and will be newly introduced is AI. AI was not involved in the 4G system. A 5G system will support partial or very limited AI. However, the 6G system will support AI for full automation. Advance in machine learning will create a more intelligent network for real-time communication in 6G. When AI is introduced to communication, real-time data transmission may be simplified and improved. AI may determine a method of performing complicated target tasks using countless analysis. That is, AI may increase efficiency and reduce processing delay.

Time-consuming tasks such as handover, network selection or resource scheduling may be immediately performed by using AI. AI may play an important role even in M2M, machine-to-human and human-to-machine communication. In addition, AI may be rapid communication in a brain computer interface (BCI). An AI based communication system may be supported by meta materials, intelligent structures, intelligent networks, intelligent devices, intelligent recognition radios, self-maintaining wireless networks and machine learning.

Recently, attempts have been made to integrate AI with a wireless communication system in the application layer or the network layer, but deep learning have been focused on the wireless resource management and allocation field. However, such studies are gradually developed to the MAC layer and the physical layer, and, particularly, attempts to combine deep learning in the physical layer with wireless transmission are emerging. AI-based physical layer transmission means applying a signal processing and communication mechanism based on an AI driver rather than a traditional communication framework in a fundamental signal processing and communication mechanism. For example, channel coding and decoding based on deep learning, signal estimation and detection based on deep learning, multiple input multiple output (MIMO) mechanisms based on deep learning, resource scheduling and allocation based on AI, etc. may be included.

Machine learning may be used for channel estimation and channel tracking and may be used for power allocation, interference cancellation, etc. in the physical layer of DL. In addition, machine learning may be used for antenna selection, power control, symbol detection, etc. in the MIMO system.

Machine learning refers to a series of operations to train a machine in order to create a machine which can perform tasks which cannot be performed or are difficult to be performed by people. Machine learning requires data and learning models. In machine learning, data learning methods may be roughly divided into three methods, that is, supervised learning, unsupervised learning and reinforcement learning.

Neural network learning is to minimize output error. Neural network learning refers to a process of repeatedly inputting training data to a neural network, calculating the error of the output and target of the neural network for the training data, backpropagating the error of the neural network from the output layer of the neural network to an input layer in order to reduce the error and updating the weight of each node of the neural network.

Supervised learning may use training data labeled with a correct answer and the unsupervised learning may use training data which is not labeled with a correct answer. That is, for example, in case of supervised learning for data classification, training data may be labeled with a category. The labeled training data may be input to the neural network, and the output (category) of the neural network may be compared with the label of the training data, thereby calculating the error. The calculated error is backpropagated from the neural network backward (that is, from the output layer to the input layer), and the connection weight of each node of each layer of the neural network may be updated according to backpropagation. Change in updated connection weight of each node may be determined according to the learning rate. Calculation of the neural network for input data and backpropagation of the error may configure a learning cycle (epoch). The learning data is differently applicable according to the number of repetitions of the learning cycle of the neural network. For example, in the early phase of learning of the neural network, a high learning rate may be used to increase efficiency such that the neural network rapidly ensures a certain level of performance and, in the late phase of learning, a low learning rate may be used to increase accuracy.

The learning method may vary according to the feature of data. For example, for the purpose of accurately predicting data transmitted from a transmitter in a receiver in a communication system, learning may be performed using supervised learning rather than unsupervised learning or reinforcement learning.

The learning model corresponds to the human brain and may be regarded as the most basic linear model. However, a paradigm of machine learning using a neural network structure having high complexity, such as artificial neural networks, as a learning model is referred to as deep learning.

Neural network cores used as a learning method may roughly include a deep neural network (DNN) method, a convolutional deep neural network (CNN) method, a recurrent Boltzmman machine (RNN) method and a spiking neural networks (SNN). Such a learning model is applicable.

### THz (Terahertz) Communication

A data rate may increase by increasing bandwidth. This may be performed by using sub-TH communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF.

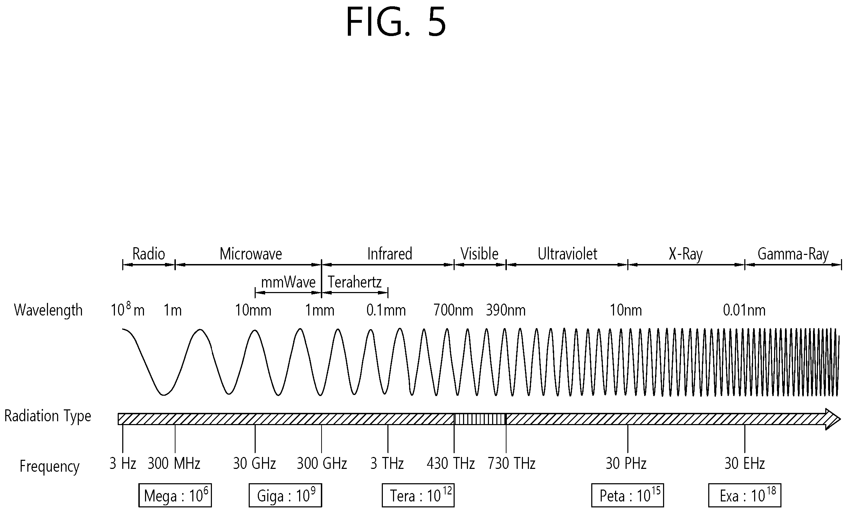

**FIG. 5** **shows an example of an electromagnetic spectrum.**

The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.

### Large-scale MIMO

One of core technologies for improving spectrum efficiency is MIMO technology. When MIMO technology is improved, spectrum efficiency is also improved. Accordingly, massive MIMO technology will be important in the 6G system. Since MIMO technology uses multiple paths, multiplexing technology and beam generation and management technology suitable for the THz band should be significantly considered such that data signals are transmitted through one or more paths.

### Hologram Beamforming

Beamforming is a signal processing procedure that adjusts an antenna array to transmit radio signals in a specific direction. This is a subset of smart antennas or advanced antenna systems. Beamforming technology has several advantages, such as high signal-to-noise ratio, interference prevention and rejection, and high network efficiency. Hologram Beamforming (HBF) is a new beamforming method that differs significantly from MIMO systems because this uses a software-defined antenna. HBF will be a very effective approach for efficient and flexible transmission and reception of signals in multi-antenna communication devices in 6G.

### Optical wireless technology

Optical wireless communication (OWC) is a form of optical communication that uses visible light, infrared light (IR), or ultraviolet light (UV) to transmit signals. OWC that operates in the visible light band (e.g., 390 to 750 nm) is commonly referred to as visible light communication (VLC). VLC implementations may utilize light-emitting diodes (LEDs). VLC can be used in a variety of applications, including wireless local area networks, wireless personal communications networks, and vehicular networks.

VLC has the following advantages over RF-based technologies. First, the spectrum occupied by VLC is free/unlicensed and can provide a wide range of bandwidth (THz-level bandwidth). Second, VLC rarely causes significant interference to other electromagnetic devices; therefore, VLC can be applied in sensitive electromagnetic interference applications such as aircraft and hospitals. Third, VLC has strengths in communications security and privacy. The transmission medium of VLC-based networks, i.e., visible light, cannot penetrate walls and other opaque obstacles. Therefore, the transmission range of VLC can be limited to indoors, which can protect users' privacy and sensitive information. Fourth, VLC can use any light source as a base station, eliminating the need for expensive base stations.

Free-space optical communication (FSO) is an optical communication technology that uses light propagating in free space, such as air, outer space, and vacuum, to wirelessly transmit data for telecommunications or computer networking. FSO can be used as a point-to-point OWC system on the ground. FSOs can operate in the near-infrared frequencies (750-1600 nm). Laser transmitters can be used in FSO implementations, and FSO can provide high data rates (e.g., 10 Gbit/s), offering a potential solution to backhaul bottlenecks.

These OWC technologies are planned for 6G communications, in addition to RF-based communications for any possible device-to-access network. These networks will access network-to-backhaul/fronthaul network connections. OWC technology has already been in use since 4G communication systems, but will be more widely used to meet the needs of 6G communication systems. OWC technologies such as light fidelity, visible light communication, optical camera communication, and FSO communication based on optical bands are already well-known technologies. Communication based on optical wireless technology can provide extremely high data rates, low latency, and secure communication.

Light Detection And Ranging (LiDAR) can also be utilized for ultra-high resolution 3D mapping in 6G communications based on the optical band. LiDAR is a remote sensing method that uses near-infrared, visible, and ultraviolet light to shine a light on an object, and the reflected light is detected by a light sensor to measure distance. LiDAR can be used for fully automated driving of cars.

### FSO Backhaul Network

The characteristics of the transmitter and receiver of the FSO system are similar to those of an optical fiber network. Accordingly, data transmission of the FSO system similar to that of the optical fiber system. Accordingly, FSO may be a good technology for providing backhaul connection in the 6G system along with the optical fiber network. When FSO is used, very long-distance communication is possible even at a distance of 10,000 km or more. FSO supports mass backhaul connections for remote and non-remote areas such as sea, space, underwater and isolated islands. FSO also supports cellular base station connections.

### Non-Terrestrial Networks (NTN)

6G systems will integrate terrestrial and aerial networks to support vertically expanding user communications. 3D BS will be provided via low-orbit satellites and UAVs. Adding a new dimension in terms of altitude and associated degrees of freedom makes 3D connectivity quite different from traditional 2D networks. NR considers Non-Terrestrial Networks (NTNs) as one way to do this. An NTN is a network or network segment that uses RF resources aboard a satellite (or UAS platform). There are two common scenarios for NTNs that provide access to user equipment: transparent payloads and regenerative payloads. The following are the basic elements of an NTN
- One or multiple sat-gateways connecting the NTN to the public data network.
- GEO satellites are fed by one or multiple satellite gateways deployed across the satellite target range (e.g., regional or continental coverage). We assume that a UE in a cell is served by only one sat-gateway.
- Non-GEO satellites that are continuously served by one or multiple satellite gateways at a time. The system shall ensure service and feeder link continuity between successive servicing satellite gateways with a time duration sufficient to allow mobility anchoring and handover to proceed.
- The feeder link or radio link between the satellite gateway and the satellite (or UAS platform).
- Service link or radio link between user equipment and the satellite (or UAS platform).
- Satellite (or UAS platform) capable of implementing transparent or regenerative (including onboard processing) payloads. Satellite (or UAS platform) generated beam A satellite (or UAS platform) generates multiple beams for a given service area, typically based on its field of view. The footprint of a beam is typically elliptical. The field of view of the satellite (or UAS platform) depends on the onboard antenna diagram and the minimum angle of attack.
- Transparent payload: Radio frequency filtering, frequency conversion, and amplification. Therefore, the waveform signal repeated by the payload remains unchanged.
- Regenerative payload: Radio frequency filtering, frequency conversion and amplification, demodulation/decryption, switching and/or routing, and coding/modulation. This is effectively the same as carrying all or part of the base station functions (e.g., gNB) on board a satellite (or UAS platform).
- Optionally, for satellite deployments, an inter-satellite link (ISL). This requires a regenerative payload on the satellite. ISL can operate at RF frequencies or in the optical band.
- The user equipment is serviced by the satellite (or UAS platform) within the targeted coverage area.

Typically, GEO satellites and UAS are used to provide continental, regional, or local services.

Typically, constellations in LEO and MEO are used to provide service in both the Northern and Southern Hemispheres. In some cases, constellations can also provide global coverage, including polar regions. The latter requires proper orbital inclination, sufficient beams generated, and links between satellites.

### Quantum Communication

Quantum communication is a next-generation communication technology that can overcome the limitations of existing communication technologies such as security and ultra-high-speed computation by applying quantum mechanical properties to the field of information and communication. Quantum communication provides a means of generating, transmitting, processing, and storing information that cannot be expressed in the form of 0s and 1s according to the binary bit information used in conventional communication technologies. In conventional communication technologies, wavelengths or amplitudes are used to transmit information between the sender and receiver, but in quantum communication, photons, the smallest unit of light, are used to transmit information between the sender and receiver. In particular, in the case of quantum communication, quantum uncertainty and quantum irreversibility can be used for the polarization or phase difference of photons (light), so quantum communication has the characteristic of being able to communicate with perfect security. Quantum communication may also enable ultrafast communication using quantum entanglement under certain conditions.

### Cell-free Communication

The tight integration of multiple frequencies and heterogeneous communication technologies is crucial for 6G systems. As a result, users will be able to seamlessly move from one network to another without having to create any manual configurations on their devices. The best network is automatically selected from the available communication technologies. This will break the limitations of the cell concept in wireless communications. Currently, the movement of users from one cell to another causes too many handovers in dense networks, resulting in handover failures, handover delays, data loss, and ping-pong effects. 6G cell-free communications will overcome all of these and provide better QoS.

Cell-free communication is defined as "a system in which multiple geographically distributed antennas (APs) cooperatively serve a small number of terminals using the same time/frequency resources with the help of a fronthaul network and a CPU." A single terminal is served by a set of multiple APs, called an AP cluster. There are several ways to form AP clusters, among which the method of organizing AP clusters with APs that can significantly contribute to improving the reception performance of a terminal is called the terminal-centric clustering method, and the configuration is dynamically updated as the terminal moves. This device-centric AP clustering technique ensures that the device is always at the center of the AP cluster and is therefore immune to inter-cluster interference that can occur when a device is located at the boundary of an AP cluster. This cell-free communication will be achieved through multi-connectivity and multi-tier hybrid technologies and different heterogeneous radios in the device.

### Integration of Wireless Information and Energy Transfer (WIET)

WIET uses the same field and wave as a wireless communication system. In particular, a sensor and a smartphone will be charged using wireless power transfer during communication. WIET is a promising technology for extending the life of battery charging wireless systems. Therefore, devices without batteries will be supported in 6G communication.

### Integration of Wireless Communication and Sensing

An autonomous wireless network is a function for continuously detecting a dynamically changing environment state and exchanging information between different nodes. In 6G, sensing will be tightly integrated with communication to support autonomous systems.

### Integrated Access and Backhaul Network

In 6G, the density of access networks will be enormous. Each access network is connected by optical fiber and backhaul connection such as FSO network. To cope with a very large number of access networks, there will be a tight integration between the access and backhaul networks.

### Big Data Analysis

Big data analysis is a complex process for analyzing various large data sets or big data. This process finds information such as hidden data, unknown correlations, and customer disposition to ensure complete data management. Big data is collected from various sources such as video, social networks, images and sensors. This technology is widely used for processing massive data in the 6G system.

### Reconfigurable Intelligent Metasurface

There has been a large body of research that considers the radio environment as a variable to be optimized along with the transmitter and receiver. The radio environment created by this approach is referred to as a Smart Radio Environment (SRE) or Intelligent Radio Environment (IRE) to emphasize its fundamental difference from past design and optimization criteria. Various terms have been proposed for reconfigurable intelligent antenna (or intelligent reconfigurable antenna technology) technologies to enable SRE, including Reconfigurable Metasurfaces, Smart Large Intelligent Surfaces (SLIS), Large Intelligent Surfaces (LIS), Reconfigurable Intelligent Surface (RIS), and Intelligent Reflecting Surface (IRS).

In the case of THz band signals, there are many shadowed areas caused by obstacles due to the strong straightness of the signal, and RIS technology is important to expand the communication area by installing RIS near these shadowed areas to enhance communication stability and provide additional value-added services. RIS is an artificial surface made of electromagnetic materials that can alter the propagation of incoming and outgoing radio waves. Although RIS can be seen as an extension of massive MIMO, it has a different array structure and operating mechanism than massive MIMO. RIS has the advantage of low power consumption because it operates as a reconfigurable reflector with passive elements, i.e., it only passively reflects signals without using active RF chains. Furthermore, each of the passive reflectors in the RIS must independently adjust the phase shift of the incoming signal, which can be advantageous for the wireless communication channel. By properly adjusting the phase shift through the RIS controller, the reflected signals can be gathered at the target receiver to boost the received signal power.

In addition to reflecting radio signals, there are also RISs that can tune transmission and refractive properties, and these RISs are often used for outdoor to indoor (O2I) applications. Recently, STAR-RIS (Simultaneous Transmission and Reflection RIS), which provides transmission at the same time as reflection, has also been actively researched.

### Metaverse

Metaverse is a combination of the words "meta" meaning virtual, transcendent, and "universe" meaning space. Generally speaking, the term is used to describe a three-dimensional virtual space in which social and economic activities are the same as in the real world.

Extended Reality (XR), a key technology that enables the metaverse, is the fusion of the virtual and the real, which can extend the experience of reality and provide a unique immersive experience. The high bandwidth and low latency of 6G networks will enable users to experience more immersive virtual reality (VR) and augmented reality (AR) experiences.

### Autonomous Driving (Self-driving)

For fully autonomous driving, vehicles need to communicate with each other to alert each other to dangerous situations, or with infrastructure such as parking lots and traffic lights to check information such as the location of parking information and signal change times. Vehicle-to-Everything (V2X), a key element in building an autonomous driving infrastructure, is a technology that enables vehicles to communicate and share information with various elements on the road, such as vehicle-to-vehicle (V2V) and vehicle-to-infrastructure (V2I), in order to drive autonomously.

In order to maximize the performance of autonomous driving and ensure high safety, fast transmission speeds and low latency technologies are essential. In addition, in the future, autonomous driving will go beyond delivering warnings and guidance messages to the driver to actively intervene in the operation of the vehicle and directly control the vehicle in dangerous situations, and the amount of information that needs to be transmitted and received will be enormous, so 6G is expected to maximize autonomous driving with faster transmission speeds and lower latency than 5G.

### Unmanned Aerial Vehicle (UAV)

An unmanned aerial vehicle (UAV) or drone will be an important factor in 6G wireless communication. In most cases, a high-speed data wireless connection is provided using UAV technology. A base station entity is installed in the UAV to provide cellular connectivity. UAVs have certain features, which are not found in fixed base station infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communications. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.

### Block-chain

A blockchain will be important technology for managing large amounts of data in future communication systems. The blockchain is a form of distributed ledger technology, and distributed ledger is a database distributed across numerous nodes or computing devices. Each node duplicates and stores the same copy of the ledger. The blockchain is managed through a peer-to-peer (P2P) network. This may exist without being managed by a centralized institution or server. Blockchain data is collected together and organized into blocks. The blocks are connected to each other and protected using encryption. The blockchain completely complements large-scale IoT through improved interoperability, security, privacy, stability and scalability. Accordingly, the blockchain technology provides several functions such as interoperability between devices, high-capacity data traceability, autonomous interaction of different IoT systems, and large-scale connection stability of 6G communication systems.

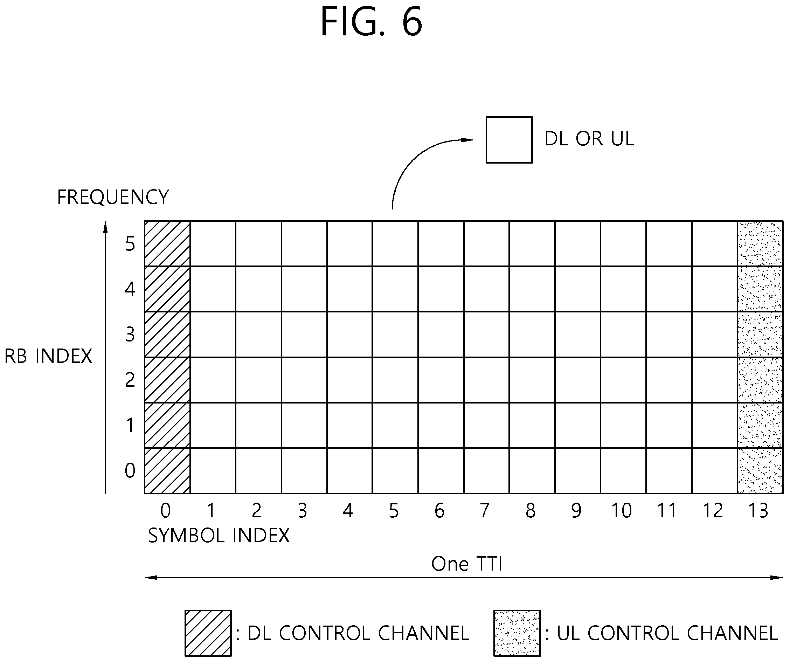

**FIG. 6** **shows an example of subframe types in NR.**

The TTI (transmission time interval) shown in FIG. 6 may be referred to as a subframe or a slot for NR (or new RAT). The subframe (or slot) of FIG. 6 may be used in a TDD system of NR (or new RAT) to minimize data transmission delay. As shown in FIG. 6, a subframe (or slot) includes 14 symbols, like the current subframe. The front symbol of the subframe (or slot) may be used for the DL control channel, and the rear symbol of the subframe (or slot) may be used for the UL control channel. The remaining symbols may be used for DL data transmission or UL data transmission. According to this subframe (or slot) structure, downlink transmission and uplink transmission may be sequentially performed in one subframe (or slot). Accordingly, downlink data may be received within a subframe (or slot), and uplink acknowledgment (ACK/NACK) may be transmitted within the subframe (or slot). The structure of such a subframe (or slot) may be referred to as a self-contained subframe (or slot). When the structure of such subframe (or slot) is used, the time it takes to retransmit data in which a reception error occurs is reduced, so that the final data transmission latency can be minimized. In such a self-contained subframe (or slot) structure, a time gap, from the transmission mode to the reception mode or from the reception mode to the transmission mode, may be required in a transition process. To this, some OFDM symbols when switching from DL to UL in the subframe structure may be set as a guard period (GP).

### <NR to SS block>

SS block (SS / PBCH block: SSB) include information necessary for the terminal to perform initial access in 5G NR, that is, a physical broadcast channel (PBCH) including a master information block (MIB) and a synchronization signal (Synchronization Signal: SS) (PSS and SSS).

In addition, a plurality of SSBs may be bundled to define an SS burst, and a plurality of SS bursts may be bundled to define an SS burst set. It is assumed that each SSB is beamformed in a specific direction, and several SSBs in the SS burst set are designed to support terminals existing in different directions, respectively.

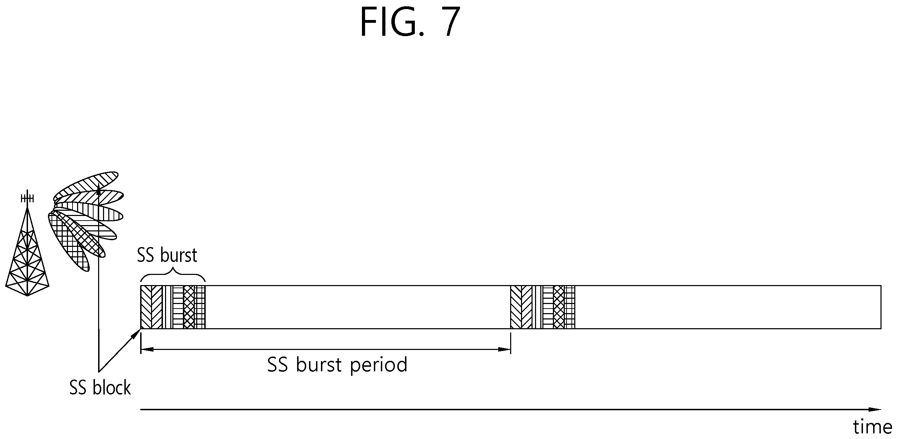

**FIG. 7** **is an exemplary diagram illustrating an example of an SS block in NR.**

Referring to FIG. 7, the SS burst is transmitted every predetermined period. Accordingly, the terminal receives the SS block, and performs cell detection and measurement.

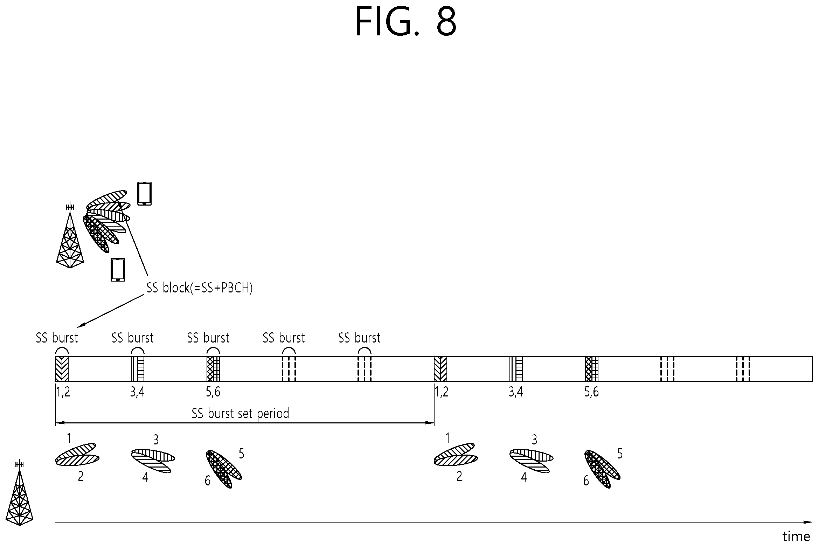

Meanwhile, in 5G NR, beam sweeping is performed for SS. This will be described with reference to FIG. 8.

**FIG. 8** **is an exemplary diagram illustrating an example of beam sweeping in NR.**

The base station transmits each SS block in the SS burst while performing beam sweeping according to time. In this case, several SS blocks in the SS burst set are transmitted to support terminals existing in different directions, respectively.

### < Multi-TRP (Transmission/Reception Point)>

CoMP (Coordinated Multi Point) is a technique in which multiple base stations exchange (e.g. using X2 interface) or utilize channel information (e.g. RI/CQI/PMI/LI, etc.) fed back from terminals, and perform cooperative transmission of terminals to effectively control interference. Depending on the method used, it may be classified into Joint transmission (JT), Coordinated scheduling (CS), Coordinated beamforming (CB), DPS (dynamic point selection), and DPB (dynamic point blacking).

NCJT (Non-coherent joint transmission) may mean cooperative transmission that does not consider interference (i.e., has no interference). For example, NCJT may be a method in which base stations (s) transmit data to a single terminal using the same time resource and frequency resource through multiple TRPs. In the case of the method, multiple TRPs of base stations (s) may be configured to transmit data to the terminal through different layers using different DMRS (demodulation reference signal) ports. In other words, NCJT may correspond to a transmission method in which transmission of MIMO layer(s) is performed from two or more TRPs without adaptive precoding between TRPs.

NCJT may be divided into a fully overlapped NCJT method in which time resources and frequency resources used by each base station (or TRP) for transmission completely overlap, and a partially overlapped NCJT method in which time resources and/or frequency resources used by each base station (or TRP) for transmission partially overlap. For example, in the case of a partially overlapped NCJT, both data of a first base station (e.g., TRP 1) and data of a second base station (e.g., TRP 2) are transmitted in some time resources and/or frequency resources, and only data of either the first base station or the second base station may be transmitted in the remaining time resources and/or frequency resources.

TRP transmits data scheduling information to the terminal receiving NCJT as DCI (Downlink Control Information). From the perspective of DCI (downlink control information) transmission, the M-TRP (multiple TRP) transmission method may be divided into i) M-DCI (multiple DCI) based M-TRP transmission in which each TRP transmits a different DCI, and ii) S-DCI (single DCI) based M-TRP transmission in which one TRP transmits a DCI.

First, let's look at the single DCI based MTRP method. In the single DCI based M-TRP method, where one representative TRP transmits scheduling information for the data it transmits and the data transmitted by other TRPs through a single DCI, MTRPs cooperatively transmit a common PDSCH, and each TRP participating in the cooperative transmission transmits the PDSCH by spatially dividing it into different layers (i.e., different DMRS ports). In other words, MTRP transmits one PDSCH, but each TRP transmits only some layers of the multiple layers that constitute one PDSCH. For example, when 4-layer data is transmitted, TRP 1 transmits 2 layers and TRP 2 transmits the remaining 2 layers to the UE.

At this time, scheduling information for the PDSCH is indicated to the UE through one DCI, and the DCI indicates which DMRS port uses which QCL RS and QCL type information (this is different from indicating QCL RS and TYPE to be applied commonly to all DMRS ports indicated in the existing DCI). For example, M TCI states are indicated through the TCI field in the DCI (M=2 in the case of 2 TRP cooperative transmission), and QCL RS and type are identified using different M TCI states for each M DMRS port group. In addition, DMRS port information may be indicated using a new DMRS table.

For example, in the case of S-DCI, since all scheduling information for data transmitted by M TRPs must be transmitted through one DCI, it may be used in an ideal BH (ideal BackHaul) environment where dynamic cooperation between two TRPs is possible.

Second, let's look at the multiple DCI based MTRP method. MTRP transmits different DCIs and PDSCHs (UE receives N DCIs and N PDSCHs from N TRPs), and the PDSCHs are transmitted with (partial or full) overlapped on frequency time resources. The PDSCHs are scrambled with different scrambling IDs, and the DCIs may be transmitted through Coresets belonging to different Coreset groups. (A Coreset group may be identified by an index defined in the Coreset configuration of each Coreset. For example, if Coreset 1 and 2 are set to index = 0, and Coreset 3 and 4 are set to index = 1, Coreset 1,2 are Coreset group 0, and Coreset 3,4 belong to the Coreset group. Also, if the index in the Coreset is not defined, it may be interpreted as index = 0.) If multiple scrambling IDs are set in one serving cell or two or more Coreset groups are set, the UE may know receiving data with multiple DCI based MTRP operation.

For example, whether it is a single DCI based MTRP method or a multiple DCI based MTRP method may be indicated to the UE through separate signaling. For example, when multiple CRS patterns are indicated to the UE for MTRP operation for one serving cell, PDSCH rate matching for the CRS may be different depending on whether it is a single DCI based MTRP method or a multiple DCI based MTRP method.

In this specification, a base station may collectively mean an object that performs data transmission and reception with a terminal. For example, a base station described in this specification may be a concept including one or more TPs (Transmission Points), one or more TRPs (Transmission and Reception Points), etc. For example, multiple TPs and/or multiple TRPs described in this specification may be included in one base station or may be included in multiple base stations. In addition, a TP and/or TRP may include a panel of a base station, a transmission and reception unit, etc.

In addition, the TRP described in this specification may mean an antenna array having one or more antenna elements available in a network located at a specific geographical location in a specific area. In this specification, for convenience of explanation, the description is based on "TRP", but the TRP may be understood/applied as a base station, a transmission point (TP), a cell (e.g., macro cell / small cell / pico cell, etc.), an antenna array, or a panel.

### <Problems to be solved in the disclosure of this specification>

In the NR FR2 mmWave band, single TRP or multi TRP may transmit signals through transmission techniques such as DPS (Dynamic point selection), common layer NCJT (Non-coherent joint transmission), independent layer NCJT, and cooperative transmission (for reliability enhancement).

The terminal may have multi-Rx chains. The terminal may utilize multi-Rx chains to simultaneously receive signals coming from different directions. In this way, multi-Rx chains must be activated to simultaneously receive multiple signals coming from different directions.

In sections where multiple signals are not transmitted to the terminal, the terminal may operate by activating only a single Rx chain to reduce power consumption. The terminal may save power by switching between a state where only a single Rx chain is activated and a state where multi-Rx chains are activated. When changing these states, the change may take time. Therefore, the operation of the terminal and/or network that considers the required time is required.

### <Disclosure of the present specification>

Describes the terminal operation related to the delay time that occurs when a terminal uses a single Rx chain and then uses a multi-Rx chain. The method proposed in this specification is described based on signal transmission and reception through the transmission technique of mTRP NCJT in a single carrier, but can be applied equally in other environments.

In this specification, the setting of the TCI state may be interpreted as the performance of activating or deactivating the TCI state. In addition, TCI state activation/deactivation may be to adjust/change or activate/deactivate the antenna panel to the TCI state indicated by the information received by the terminal.

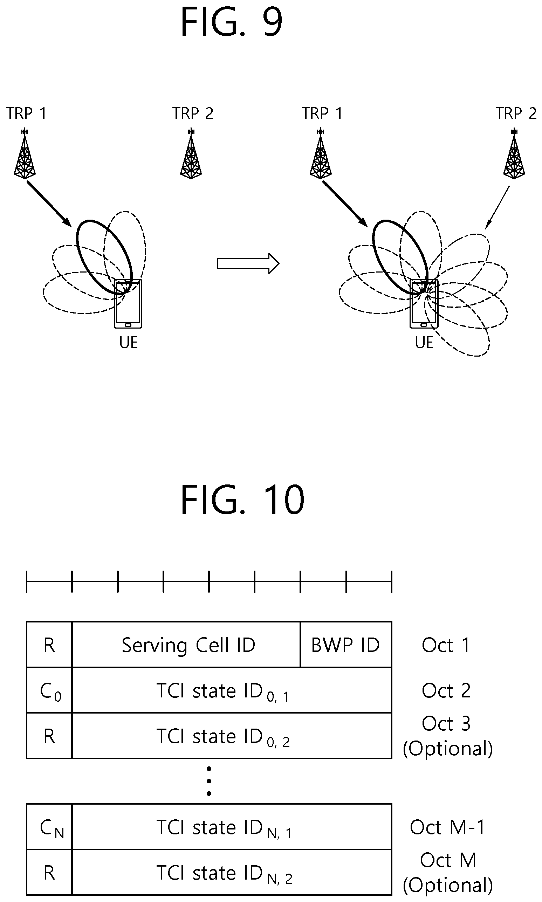

**FIG. 9** **shows the operation of the terminal according to the single Rx chain and the multi-Rx chain.**

The left drawing of FIG. 9 shows that the terminal receives a signal from TRP1 using a single Rx chain.

The right drawing of FIG. 9 shows that the terminal receives a signal from TRP1 and TRP2 using a multi-Rx chain.

Even if the terminal has the capability to simultaneously receive signals from multi-TRPs with multi-reception chains, the terminal may receive signals by activating only a single reception chain in order to save power. If multi-reception chains are required, the terminal may activate a reception chain that is deactivated. Then, signals from multi-TRPs may be simultaneously received using the activated multi-reception chains. It may take time for the terminal to activate or deactivate the multi-reception chains. The terminal and the network may operate considering the time required.

Even if the terminal has the capability to simultaneously receive signals from multi-TRPs (i.e., a terminal supporting simultaneousReceptionDiffTypeD capability), the terminal may not always activate the multi-antenna panel (e.g., two antenna panels) in order to reduce power consumption. For example, the terminal may use one antenna panel until a signal is received from the multi-TRP, and may activate two antenna panels to receive signals from the multi-TRP when signals are received from the multi-TRP. In this case, the terminal may require a preparation time until activating both antenna panels after operating only one activated antenna panel.

The preparation time for activating the antenna panel may include the time for stabilization after powering on the antenna panel, the time for applying the QCL of the set TCI state, etc. In addition, additional RF, RRM processing time may be included in the preparation time for activating the antenna panel.

The network may transmit the setting(configuration) of the TCI state for the TRP to the terminal. In order to perform communication with the TRP, the terminal may set an appropriate reception beam for the TRP based on the received TCI state.

Similarly, the network may transmit the setting of the changed TCI state for the TRP to the terminal. In order to perform communication with the TRP, the terminal may set an appropriate reception beam for the TRP based on the received changed TCI state.

In this way, when the terminal receives the setting of the TCI state, it may perform the setting of the reception beam, etc. according to the TCI state to perform communication with the corresponding TRP. This setting of the reception beam (etc.) may take time. Therefore, the time (delay) from the time when the terminal receives the setting of the TCI state to the time when the terminal can perform communication with the corresponding TRP may be considered for communication.

The terminal may receive DCI from the currently connected network (TRP). DCI (Downlink Control Indicator) may include scheduling information on when and how the base station will send a signal or information for decoding of the terminal. When the terminal receives DCI, the indicated value of the corresponding DCI TCI field (hereinafter collectively referred to as DCI) may have multiple TCI states (e.g., two TCI states) set. Then, the terminal may determine that it will receive signals from a multi-TRP and prepare for the activation operation of two antenna panels.

Alternatively, the terminal may receive multiple CORESET pools (e.g., two CORESET pool configurations) set via RRC instead of DCI. Then, the terminal may determine that it will receive signals via a multi-TRP and prepare for the activation operation of two antenna panels.

**FIG. 10** **shows an example of a TCI state.**

Serving Cell ID may indicate the ID of the serving cell to which the MAC CE applies. This field may be 5 bits long. If the indicated serving cell is configured as part of simultaneousTCI-UpdateList1 or simultaneousTCI-UpdateList2, this MAC CE may be applied to all serving cells configured in the configured simultaneousTCI-UpdateList1 or simultaneousTCI-UpdateList2, respectively.

BWP ID may indicate the DL BWP that the MAC CE applies as a code point of the DCI Bandwidth Part Indicator field. The BWP ID field may be 2 bits long.

Cᵢ may indicate whether an octet containing TCI state IDi,2 is present. If this field is set to 1, an octet containing TCI state IDi,2 is present. If this field is set to 0, an octet containing TCI state IDi,2 is not present;

TCI state ID_{i,j} indicates a TCI state identified by TCI-StateId, where i is a code point index of the DCI Transmission Configuration Indication field, and TCI state ID_{i,j} indicates the jth TCI state indicated by the ith code point in the DCI Transmission Configuration Indication field. The TCI code point to which the TCI state is mapped is determined by its ordinal position among all TCI code points that have the TCI state ID_{i,j} field set. For example, the first TCI code point with TCI state ID_{0,1} and TCI state ID_{0,2} is mapped to code point value 0, the second TCI code point with TCI state ID_{1,1} and TCI state ID_{1,2} is mapped to code point value 1, and so on. TCI state ID_{1,2} is optional depending on the indication in the Cᵢ field. The maximum number of enabled TCI code points is 8, and the maximum number of TCI states mapped to TCI code points is 2.

R may mean a reserved bit. It may be set to 0.

For example, the network may transmit a MAC CE including a TCI state ID to the terminal, and the terminal may perform TCI state activation or deactivation based on the MAC CE. The TCI state activation or deactivation may be adjusting, activating, or deactivating a specific antenna panel to a specific TCI state.

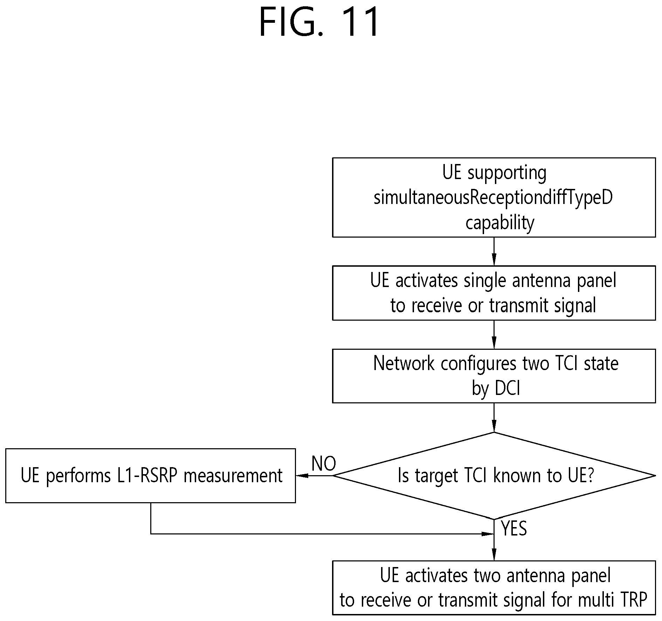

**FIG. 11** **is a flowchart illustrating an example in which a terminal activates two antenna panels.**

The terminal may have the capability (simultaneousReceptionDiffTypeD) to simultaneously receive signals from multiple TRPs.

The terminal may notify the network of the capability.

The terminal may activate one antenna panel for transmitting and receiving signals.

The network may transmit a DCI setting two TCI states to the terminal. For exmaple, the network may set two TCI states through the DCI.

The network may send a TCI state for a TRP to the terminal. Even though the terminal has confirmed the received TCI state, it may not know which reception beam to use for receiving a signal from the corresponding TRP. In this case, the terminal may perform L1-RSRP measurement to determine the optimal reception beam to receive a signal from the corresponding TRP. The signal from the corresponding TRP may be received using the determined optimal reception beam. The measurement of L1-RSRP of the terminal may cause a delay.

If the terminal does not know the target TCI state, the terminal may activate two antenna panels after performing the L1-RSRP measurement operation. Or, if the terminal knows the target TCI state, the terminal may activate two antenna panels.

If the terminal does not know the target TCI state, the terminal does not know which reception beam to receive, so it may perform L1-RSRP to determine the optimal reception beam.

If the terminal does not know the set target TCI state, an additional delay for the L1-RSRP measurement operation should be considered. The L1-RSRP measurement may be performed through one antenna panel or after activating both antenna panels.

The terminal may transmit and receive signals with the multi-TRP using the two activated antenna panels.

During the time that the terminal takes to activate the antenna panel for signal reception from the multi-TRP, the terminal may not be expected or required to transmit or receive signals.

The time from when the terminal receives the DCI in which two TCI states are set to the time when the terminal completes activation of the antenna panel may be defined as the activation delay.

If the terminal receives two CORESET pools through the RRC signal, the time from when the terminal receives the RRC signal to the time when the RRC processing delay and the antenna panel activation are completed may be defined as the activation delay.

The terminal may perform the transmission and reception operation of the signal on the first slot after the aforementioned activation delay.

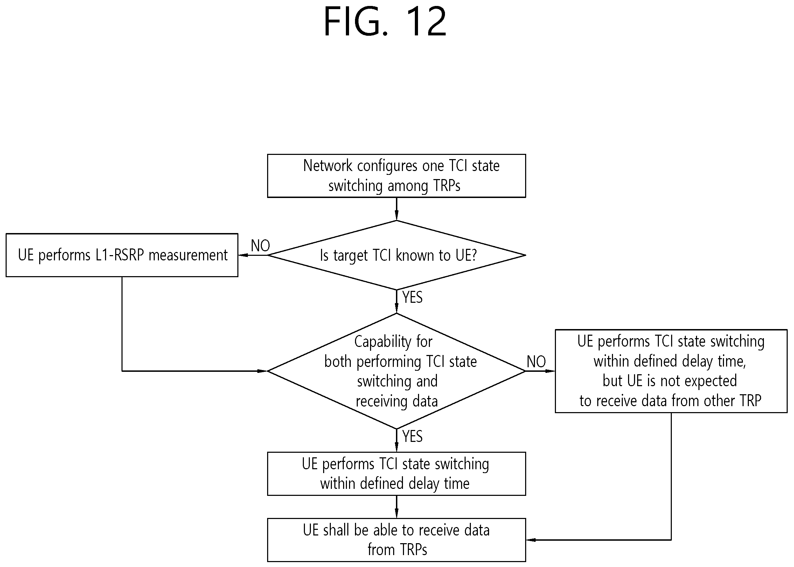

**FIG. 12** **shows an example of one TCI state change.**

The network may set a TCI state change of one of the multiple TRPs.

The TCI state change may be delayed. The delay may include a delay due to measurement.

If the terminal does not know a suitable receive beam for the changed TCI state, the terminal may perform L1-RSRP measurement to determine a suitable receive beam. This measurement may cause a delay.

If the terminal knows a suitable receive beam for the changed TCI state or detemines a suitable receive beam through the above-mentioned measurement, the terminal may perform a TCI state change. The TCI state change may be a change of the receive beam. Since this TCI state change takes time, a certain amount of delay may occur.

The terminal may receive data from multiple TRPs after the TCI state change.

If the TCI state of one TRP is changed while the terminal is receiving signals through multi-TRP, a delay for the TCI state change may be considered. The delay for the TCI state change may be applied to a value defined in the current spec. (e.g., DCI-based TCI state change delay = slot n + timeDurationForQCL)

In this case, depending on the capability of the terminal, the terminal may not transmit or receive signals with all TRPs during the delay for TCI state change.

In contrast, the terminal may maintain signal reception from TRPs where the TCI state is maintained, and may not receive signals from TRPs where the TCI state is changed during the delay, considering the delay for TCI state change only for TRPs where the TCI state is changed.

If the terminal does not know the target TCI state set (changed) by the TRP, the terminal must perform L1-RSRP measurement operation, and scheduling restriction may be set for other TRPs during the operation. For example, scheduling restriction may be set for the symbol for measuring L1-RSRP and the symbols before and after it. timeDurationForQCL may be the minimum number of symbols required for the terminal to perform PDCCH reception and apply the QCL information set by DCI. timeDurationForQCL may be the time from the last symbol of reception of PDCCH to the first symbol of reception of PDSCH.

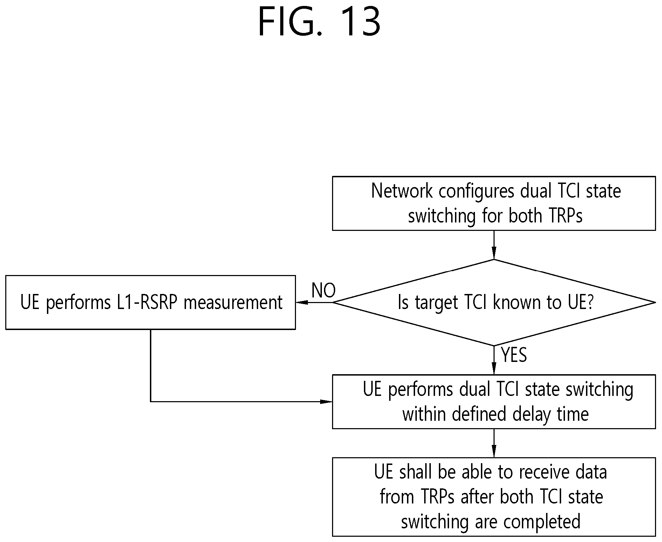

**FIG. 13** **shows an example of two TCI state changes.**

The network may set up each TCI state change for the two TRPs.

While the terminal is receiving signals through multi-TRP, the TCI states of all TRPs (e.g., two TRPs) may be changed.

The TCI state change may be delayed. The delay may include a delay due to measurement.

If the terminal does not know a suitable reception beam for the changed TCI state, the terminal may perform L1-RSRP measurement to determine a suitable reception beam. This measurement may cause a delay.

If the terminal knows a suitable reception beam for the changed TCI state or determines a suitable reception beam through the above-mentioned measurement, the terminal may perform a TCI state change. The TCI state change may be a change of the reception beam. Since this TCI state change takes time, a delay of a certain amount of time may occur.

The terminal may receive data from multiple TRPs after the TCI state change.

The terminal may consider the delay for the TCI state change mentioned above.

After both TCI state changes are completed, the terminal may transmit or receive a signal based on the changed TCI state.

If two TCI state changes are set at the same timing, the two TRPs may transmit data signals and the terminal can receive the signals after considering the two TCI state change delays (=slot n + timeDurationForQCL).

If two TCI state changes are set with a certain time offset, the TCI state change delay (=slot n + timeDurationForQCL) may be defined based on the time set later among the two TCI state change settings in order for the terminal to simultaneously receive signals from the two TRPs. The time between the TCI state setting time and the data transmission time in the TRP may be greater than timeDurationForQCL. To set the total delay for two TCI state changes, the network may assume the total delay by adding the offset of the two TCI state change configuration times to the value of timeDurationForQCL.

The UE shall be able to receive PDSCH with target TCI states of the serving TRPs on which TCI state switch occurs at the first slot that is after switching delay time.

If the UE does not know the target TCI states set from one or two TRPs, it shall perform L1-RSRP measurement operation and transmit or receive signals based on the corresponding TCI state after all TCI state changes including the operation are completed.

The target TCI state in this specification may be a changed TCI state, or may be an appropriate reception beam of the UE according to the changed TCI state.

When a terminal receives signals through a multi-TRP, if the directions of two signals are similar (small AoA), the terminal may receive the two signals with one receiving beam to reduce power consumption.

The terminal may perform power-off for an unused antenna panel. If a TCI state change of one or all TRPs among the multi-TRPs is requested while one antenna panel is powered-off, the terminal may activate the powered-off antenna panel by power-on. The time (delay) required for activation may be included in the delay due to the TCI state change described in this specification.

The terminal and/or the network may consider the delay due to the TCI state change. The delay due to the TCI state change may include i) the delay due to the L-RSRP measurement performed because the terminal does not know the target TCI state, ii) the time (delay) required to activate the antenna panel, iii) the offset in the case where multiple TCI state changes are set with a certain offset, (etc.). The delay due to a TCI state change may include the time during which the terminal is unable to transmit or receive signals because the network has set a TCI state change. The delay due to a TCI state change may mean the time from when the terminal receives the TCI state change setting to when the terminal can receive data.

The terminal may not transmit or receive signals during the delay due to a TCI state change. The terminal may receive data after the delay due to the TCI state change setting after receiving the TCI state change setting.

The network may not schedule signal transmission or reception with the terminal during the delay due to a TCI state change.

### <TCI state>

IE A TCI-state may associate one or two DL reference signals with a corresponding QCL (quasi-colocation) type.

A TCI-state may include tci-StateId (TCI-StateId), qcl-Type1 (QCL-Info) and qcl-Type2 (QCL-Info).

QCL-Info may include cell(ServCellIndex), bwp-Id(BWP-Id), referenceSignal(CHOICE {csi-rs(NZP-CSI-RS-ResourceId), ssb(SSB-Index)} and qcl-Type(ENUMERATED {typeA, typeB, typeC, typeD}).

Table 4 is a description of QCL-Info.

**[Table 4]**

| QCL-Info field descriptions |
|---|
| **bwp-Id** |
| The DL BWP which the RS is located in. |
| **cell** |
| The UE's serving cell in which the referenceSignal is configured. If the field is absent, it applies to the serving cell in which the TCI-State is applied by the UE. The RS can be located on a serving cell other than the serving cell for which the TCI-State is applied by the UE only if the qcl-Type is configured as typeC or typeD. |
| **referenceSignal** |
| Reference signal with which quasi-collocation information is provided. |
| **qcl-Type** |
| QCL type |

Table 5 is a description of TCI-State.

**[Table 5]**

| TCI-State field descriptions |
|---|
| **additionalPCI** |
| Indicates the physical cell IDs (PCI) of the SSBs when referenceSignal is configured as SSB for both QCL-Type1 and QCL-Type2. In case the cell is present, the additionalPCI refers to a PCI value configured in the list configured using additionalPCI-ToAddModList in the serving cell indicated by the field cell. Otherwise, it refers to a PCI value configured in a list additionalPCI-ToAddModList configured in the serving cell where the TCI-State is applied by the UE. When this field is present the cell for qcl-Type1 and qcl-Type2 is configured with same value, if present. |
| **pathlossReferenceRS-Id** |
| The ID of the reference signal (e.g. a CSI-RS or an SS block) used for PUSCH, PUCCH and SRS path loss estimation. |
| **qcl-Type1, qcl-Type2** |
| QCL information for the TCI state. |
| **tci-StateId** |
| ID number of the TCI state. |
| **ul-PowerControl** |
| Configures power control parameters for PUCCH, PUSCH and SRS for this TCI state. The field is present here only if ul-powerControl is not configured in any BWP-Uplink-Dedicated of this serving cell. |

The following drawings are created to explain specific examples of this specification. The names of specific devices or names of specific signals/messages/fields described in the drawings are presented as examples, and therefore, the technical features of this specification are not limited to the specific names used in the following drawings.

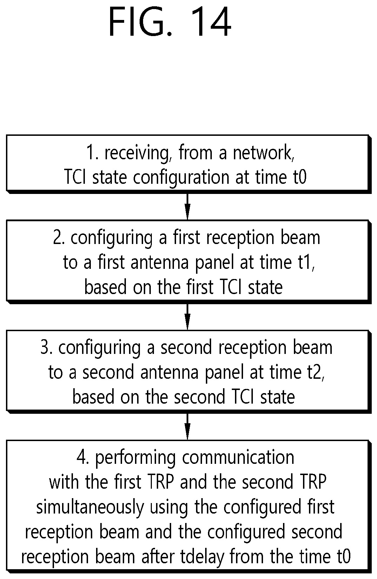

**FIG. 14** **shows the procedure of the UE according to disclosure of the present specification.**
1. The UE may receive, from a network, TCI (Transmission Configuration Indicator) state configuration at time t0.
   The TCI state configuration may include i) configuration of a first TCI state for a first TRP (Transmission/Reception Point) and ii) configuration of a second TCI state for a second TRP.
2. The UE may configure a first reception beam to a first antenna panel at time t1, based on the first TCI state.
3. The UE may configure a second reception beam to a second antenna panel at time t2, based on the second TCI state.
4. The UE may perform communication with the first TRP and the second TRP simultaneously using the configured first reception beam and the configured second reception beam after tdelay from the time t0.

The time t1 and the time t2 may have a time difference of toffset.

The tdelay may include the toffset.

The step of configuring the first reception beam comprises: performing L1-RSRP (Layer 1 reference signal received power) measurement, based on the UE not knowing a suitable reception beam for the first TCI state; and determining the first reception beam as a suitable reception beam, based on the performed L1-RSRP measurement,

The tdelay may include a time required for the L 1-RSRP measurement.

The L1-RSRP measurement may be measurement of signal strength of a reference signal from the first TRP.

The UE may perform communication with the second TRP using the second reception beam while the UE performs the L1-RSRP measurement.

The TCI state configuration may be configured via DCI (Downlink Control Indicator), RRC (Radio Resource Control) or MAC CE (Medium Access Control Control Elements).

The UE may transmit, from the network, a capability (simultaneousReceptionDiffTypeD capability) capable of receiving signals simultaneously from multiple TRPs.

Hereinafter, an apparatus for performing communication according to some embodiments of the present specification will be described.

For example, the apparatus may include a processor, a transceiver, and a memory.

For example, a processor may be configured to be operably coupled with a memory and a processor.

The processor may perform: receiving, from a network, TCI (Transmission Configuration Indicator) state configuration at time t0; wherein the TCI state configuration includes i) configuration of a first TCI state for a first TRP (Transmission/Reception Point) and ii) configuration of a second TCI state for a second TRP, configuring a first reception beam to a first antenna panel at time t1, based on the first TCI state; configuring a second reception beam to a second antenna panel at time t2, based on the second TCI state; performing communication with the first TRP and the second TRP simultaneously using the configured first reception beam and the configured second reception beam after tdelay from the time t0; wherein the time t1 and the time t2 have a time difference of toffset, wherein the tdelay includes the toffset.

Hereinafter, a processor for providing communication according to some embodiments of the present specification will be described.

The processor is configured to: receiving, from a network, TCI (Transmission Configuration Indicator) state configuration at time t0; wherein the TCI state configuration includes i) configuration of a first TCI state for a first TRP (Transmission/Reception Point) and ii) configuration of a second TCI state for a second TRP, configuring a first reception beam to a first antenna panel at time t1, based on the first TCI state; configuring a second reception beam to a second antenna panel at time t2, based on the second TCI state; performing communication with the first TRP and the second TRP simultaneously using the configured first reception beam and the configured second reception beam after tdelay from the time t0; wherein the time t1 and the time t2 have a time difference of toffset, wherein the tdelay includes the toffset.

Hereinafter, a non-volatile computer readable medium storing one or more instructions for providing multicast service in wireless communication according to some embodiments of the present specification will be described.

According to some embodiments of the present disclosure, the technical features of the present disclosure may be directly implemented as hardware, software executed by a processor, or a combination of the two. For example, in wireless communication, a method performed by a wireless device may be implemented in hardware, software, firmware, or any combination thereof. For example, the software may reside in RAM memory, flash memory, ROM memory, EPROM memory, EEPROM memory, registers, hard disk, removable disk, CD-ROM, or other storage medium.

Some examples of a storage medium are coupled to the processor such that the processor can read information from the storage medium. Alternatively, the storage medium may be integrated into the processor. The processor and storage medium may reside in the ASIC. For another example, a processor and a storage medium may reside as separate components.

Computer-readable media can include tangible and non-volatile computer-readable storage media.

For example, non-volatile computer-readable media may include random access memory (RAM), such as synchronization dynamic random access memory (SDRAM), read-only memory (ROM), or non-volatile random access memory (NVRAM). Read-only memory (EEPROM), flash memory, magnetic or optical data storage media, or other media that can be used to store instructions or data structures or Non-volatile computer readable media may also include combinations of the above.

Further, the methods described herein may be realized at least in part by computer-readable communication media that carry or carry code in the form of instructions or data structures and that can be accessed, read, and/or executed by a computer.

According to some embodiments of the present disclosure, a non-transitory computer-readable medium has one or more instructions stored thereon. The stored one or more instructions may be executed by a processor of the base station.

The stored one or more instructions cause receiving, from a network, TCI (Transmission Configuration Indicator) state configuration at time t0; wherein the TCI state configuration includes i) configuration of a first TCI state for a first TRP (Transmission/Reception Point) and ii) configuration of a second TCI state for a second TRP, configuring a first reception beam to a first antenna panel at time t1, based on the first TCI state; configuring a second reception beam to a second antenna panel at time t2, based on the second TCI state; performing communication with the first TRP and the second TRP simultaneously using the configured first reception beam and the configured second reception beam after tdelay from the time t0; wherein the time t1 and the time t2 have a time difference of toffset, wherein the tdelay includes the toffset.

The present specification may have various effects.

For example, the terminal can perform communication by taking into account the time required for TCI state change (setting) for the multi-receiver chain.

Effects that can be obtained through specific examples of the present specification are not limited to the effects listed above. For example, various technical effects that a person having ordinary skill in the related art can understand or derive from this specification may exist. Accordingly, the specific effects of the present specification are not limited to those explicitly described herein, and may include various effects that can be understood or derived from the technical characteristics of the present specification.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method. Other implementations are within the scope of the following claims.

## Claims

1. A method for performing communication, performed by a User Equipment (UE), comprising:
receiving, from a network, TCI (Transmission Configuration Indicator) state configuration at time t0;
wherein the TCI state configuration includes i) configuration of a first TCI state for a first TRP (Transmission/Reception Point) and ii) configuration of a second TCI state for a second TRP,
configuring a first reception beam to a first antenna panel at time t1, based on the first TCI state;
configuring a second reception beam to a second antenna panel at time t2, based on the second TCI state;
performing communication with the first TRP and the second TRP simultaneously using the configured first reception beam and the configured second reception beam after tdelay from the time t0;
wherein the time t1 and the time t2 have a time difference of toffset,
wherein the tdelay includes the toffset.

2. The method of claim 1,
wherein the step of configuring the first reception beam comprises:
performing L1-RSRP (Layer 1 reference signal received power) measurement, based on the UE not knowing a suitable reception beam for the first TCI state; and
determining the first reception beam as a suitable reception beam, based on the performed L1-RSRP measurement,
wherein the tdelay includes a time required for the L1-RSRP measurement.

3. The method of claim 2,
wherein the L 1-RSRP measurement is measurement of signal strength of a reference signal from the first TRP.

4. The method of claim 2, further comprising:
performing communication with the second TRP using the second reception beam while the UE performs the L1-RSRP measurement.

5. The method of claim 1,
wherein the TCI state configuration is configured via DCI (Downlink Control Indicator), RRC (Radio Resource Control) or MAC CE (Medium Access Control Control Elements).

6. The method of claim 1, further comprising:
transmitting, from the network, a capability (simultaneousReceptionDiffTypeD capability) capable of receiving signals simultaneously from multiple TRPs.

7. A User Equipment (UE), to perform communication, comprising:
a transceiver; and
a processor,
wherein the processor performs operation comprising:
receiving, from a network, TCI (Transmission Configuration Indicator) state configuration at time t0;
wherein the TCI state configuration includes i) configuration of a first TCI state for a first TRP (Transmission/Reception Point) and ii) configuration of a second TCI state for a second TRP,
configuring a first reception beam to a first antenna panel at time t1, based on the first TCI state;
configuring a second reception beam to a second antenna panel at time t2, based on the second TCI state;
performing communication with the first TRP and the second TRP simultaneously using the configured first reception beam and the configured second reception beam after tdelay from the time t0;
wherein the time t1 and the time t2 have a time difference of toffset,
wherein the tdelay includes the toffset.

8. The UE of claim 7,
wherein the step of configuring the first reception beam comprises:
performing L1-RSRP (Layer 1 reference signal received power) measurement, based on the UE not knowing a suitable reception beam for the first TCI state; and
determining the first reception beam as a suitable reception beam, based on the performed L1-RSRP measurement,
wherein tdelay includes a time required for the L1-RSRP measurement.

9. The UE of claim 8,
wherein the L 1-RSRP measurement is measurement of signal strength of a reference signal from the first TRP.

10. The UE of claim 8, wherein the operation further comprises:
performing communication with the second TRP using the second reception beam while the UE performs the L1-RSRP measurement.

11. The UE of claim 7,
wherein the TCI state configuration is configured via DCI (Downlink Control Indicator), RRC (Radio Resource Control) or MAC CE (Medium Access Control Control Elements).

12. The UE of claim 8, wherein the operation further comprises:
transmitting, from the network, a capability (simultaneousReceptionDiffTypeD capability) capable of receiving signals simultaneously from multiple TRPs.

13. An apparatus in mobile communication, comprising:
at least one processor; and
at least one memory storing instructions and operably electrically connectable with the at least one processor,
wherein, based on the instructions being operated by the at least one processor, the instructions perform operation comprising:
receiving, from a network, TCI (Transmission Configuration Indicator) state configuration at time t0;
wherein the TCI state configuration includes i) configuration of a first TCI state for a first TRP (Transmission/Reception Point) and ii) configuration of a second TCI state for a second TRP,
configuring a first reception beam to a first antenna panel at time t1, based on the first TCI state;
configuring a second reception beam to a second antenna panel at time t2, based on the second TCI state;
performing communication with the first TRP and the second TRP simultaneously using the configured first reception beam and the configured second reception beam after tdelay from the time t0;
wherein the time t1 and the time t2 have a time difference of toffset,
wherein the tdelay includes the toffset.

14. A non-volatile computer readable storage medium having recorded instructions,
wherein the instructions, based on being executed by one or more processors, cause the one or more processors to perform operation comprising:
receiving, from a network, TCI (Transmission Configuration Indicator) state configuration at time t0;
wherein the TCI state configuration includes i) configuration of a first TCI state for a first TRP (Transmission/Reception Point) and ii) configuration of a second TCI state for a second TRP,
configuring a first reception beam to a first antenna panel at time t1, based on the first TCI state;
configuring a second reception beam to a second antenna panel at time t2, based on the second TCI state;
performing communication with the first TRP and the second TRP simultaneously using the configured first reception beam and the configured second reception beam after tdelay from the time t0;
wherein the time t1 and the time t2 have a time difference of toffset,
wherein the tdelay includes the toffset.
